# EUROPEAN PATENT APPLICATION

(11) **EP 2 868 434 A1**
(43) Date of publication of application: **06.05.2015**
(21) Application number: 14150564.4
(22) Date of filing: 09.01.2014
(51) Int. Cl.: B23Q 7/04, B25J 5/02, B25J 9/02, B25J 9/04, B25J 9/08, B65G 47/90

(54) **Front door-type automatic material-taking device**

(30) Priority: 30.10.2013 TW 102139403
(71) Applicant: Barload Machine Co.,Ltd., Changhua County 50080 (TW)
(72) Inventor: Lu, Fang-Yen, Changhua County 50080 (TW)
(74) Representative: Becker Kurig Straus

(57) **Abstract**

A front door-type automatic material-taking device (10) includes a feed table (20), a material-taking mechanism (30) and a sliding mechanism (40). The feed table (20) is positioned in front of a machine tool (1) and serves to hold workpieces (6). The material-taking mechanism (30) includes a linear displacement unit (31) and a robotic arm (33). The linear displacement unit (31) is fixed to the feed table (20), and drives the robotic arm (33) to move along a first axis (Z), a second axis (X), and a third axis (Y) and to rotate against the first axis (Z) up to a specific angle. The material-taking mechanism (30) is slidably attached to the sliding mechanism (40) for sliding away from the front of the machine tool (1). The disclosed feed table has good stability, thereby enabling the material-taking mechanism (30) to take and place workpieces (6) with enhanced precision, and the sliding mechanism (30) allows the feed table to perform prompt movement, thereby improving working efficiency.

## Description

### BACKGROUND OF THE INVENTION

### 1. Technical Field

The present invention relates to material-taking devices for machine tools, and more particularly to a front door-type automatic material-taking device, which significantly improves the precision of workpiece placing with its strengthened stability, and enhances working efficiency with its prompt displacement.

### 2. Description of Related Art

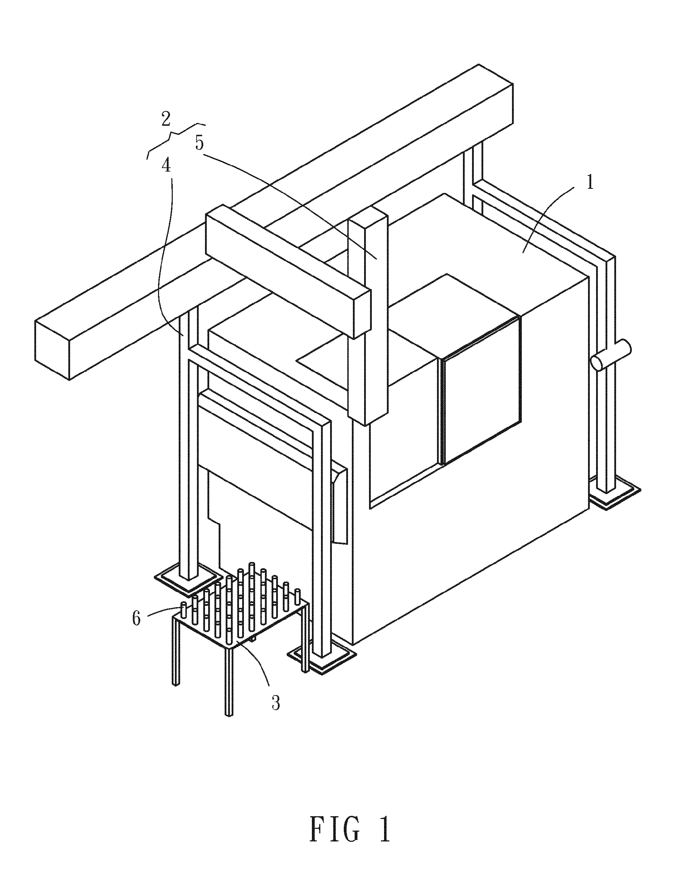

The conventional automated CNC machine tool 1 uses a gantry-type material-taking device 2 to automatically take and place material from and to the machine tool 1 and a feed table 3. As shown in FIG. 1, the gantry-type material-taking device 2 has a rack 4 and a robotic arm 5. The rack 4 spans over the machine tool 1. The robotic arm 5 is installed above the machine tool 1 and configured to move horizontally along the rack 4. The feed table 3 is set beside the machine tool 1. In practical use, the robotic arm 5 first moves to the top of the feed table 3 and then goes down to take a workpiece 6. Following that, after going up and moving to the top of the machine tool 1, the robotic arm 5 has its end carrying the workpiece 6 extending toward a chuck (not shown) of the machine tool 1, so that the chuck can take over the workpiece 6 for machining. Upon the completion of machining, the robotic arm 5 stretches to the chuck of the machine tool 1 again to take and put the machined workpiece 6 back to the feed table 3, thereby accomplishing automatic material-taking and material-placing procedures.

However, the rack 4 of the conventional gantry-type material-taking device 2 is composed of two symmetrically set upright posts. When the robotic arm 5 moves on the rack 4, the rack 4 can sway because the rack 4 is structurally instable, and make the gantry-type material-taking device 2 unable to take and place the workpiece 6 precisely.

To conclude, the conventional material-taking device has the foregoing shortcomings and needs to be improved.

### SUMMARY OF THE INVENTION

The primary objective of the present invention is to provide a front door-type automatic material-taking device with good stability, which ensures precision when taking and placing and performs prompt movement thereby enhancing working efficiency.

For achieving the foregoing objective, the disclosed front door-type automatic material-taking device comprises a feed table, a material-taking mechanism and a sliding mechanism. The feed table is set in front of a machine tool and serves to hold a workpiece. The material-taking mechanism comprises a linear displacement unit and a robotic arm. The linear displacement unit is fixed to the top of the feed table, and serves to move the robotic arm along a first axis, a second axis, and a third axis and make the robotic arm rotate up to a specific angle against the first axis, so that the robotic arm is enabled to move between the feed table and the machine tool for taking and placing the workpiece. The sliding mechanism is fixed to the ground. The material-taking mechanism is slidably attached to the sliding mechanism and configured to slide away from the front of the machine tool.

Therein, the feed table comprises a base and a platform deposited on the base. The base has an electric control unit, which is electrically connected to the material-taking mechanism and to the machine tool, respectively. The platform is provided with a positioning section and a tray. The tray is positioned on the positioning section, and serves to hold the workpiece.

Therein, the feed table further comprises a frame, which is mounted on the base and surrounds a periphery of the platform.

Therein, the frame has a shutter deposited in front of the second axis and pivotable against the third axis.

Therein, the linear displacement unit includes a first slide rail seat, a second slide rail seat and a third slide rail seat. The first slide rail seat is mounted on the top of the feed table and extends to the second axis. The second slide rail seat spans over the first slide rail seat and can move along the second axis. The third slide rail seat is slidably attached to the second slide rail seat and can move along the first axis. The robotic arm is such mounted on the third slide rail seat that it can move.

Therein, the third slide rail seat of the linear displacement unit has a holding section, a pivoting section, and a driving section. The holding section is slidably attached to the second slide rail seat. The pivoting section is pivotally attached to the holding section. The robotic arm is movably attached to the pivoting section. The driving section is connected between the holding section and the pivoting section.

Therein, the machine tool and the feed table are atop provided with a feed inlet and an opening, respectively, for the robotic arm to place and take the workpiece into and from the feed inlet and the opening.

Therein, the sliding mechanism includes a fixed seat and a sliding seat. The fixed seat is fixed to the ground. The sliding seat is deposited on a base of the feed table, and can shift between a working position and a stop position on the fixed seat.

Therein, the sliding mechanism further comprises a positioning member, which is provided between the fixed seat and the sliding seat, for positioning the sliding seat at the working position or the stop position.

Therein, the robotic arm has a material-taking section, which is rotatably affixed to a front end of the robotic arm and faces the feed table, for rotating to take and place the workpiece.

The disclosed feed table has good stability, thereby enabling the material-taking mechanism to take and place workpieces with enhanced precision, and the sliding mechanism allows the feed table to perform prompt movement, thereby improving working efficiency.

For further illustrating the means and functions by which the present invention achieves the certain objectives, the following description, in conjunction with the accompanying drawings and preferred embodiments, is set forth as below to illustrate the implement, structure, features and effects of the subject matter of the present invention.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a perspective view of a conventional gantry-type automatic material-taking device;
FIG. 2 is a perspective view of a front door-type automatic material-taking device according to one embodiment of the present invention;
FIG. 3 is a left lateral view of the front door-type automatic material-taking device of FIG. 2, showing its robotic arm tilt for a specific angle;
FIG. 4 is another left lateral view of the front door-type automatic material-taking device of FIG. 2, showing the robotic arm taking a workpiece and placing it at the chuck of the machine tool;
FIG. 5 is a front view of the front door-type automatic material-taking device of FIG. 2, showing the feed table positioned at the working position;
FIG. 6 is another front view of the front door-type automatic material-taking device of FIG. 2, showing the feed table positioned at the stop position; and
FIG. 7 is another left lateral view of the front door-type automatic material-taking device of FIG. 2, showing the robotic arm extending downward to take a workpiece.

### DETAILED DESCRIPTION OF THE INVENTION

The following preferred embodiments when read with the accompanying drawings are made to clearly exhibit the above-mentioned and other technical contents, features and effects of the present invention.

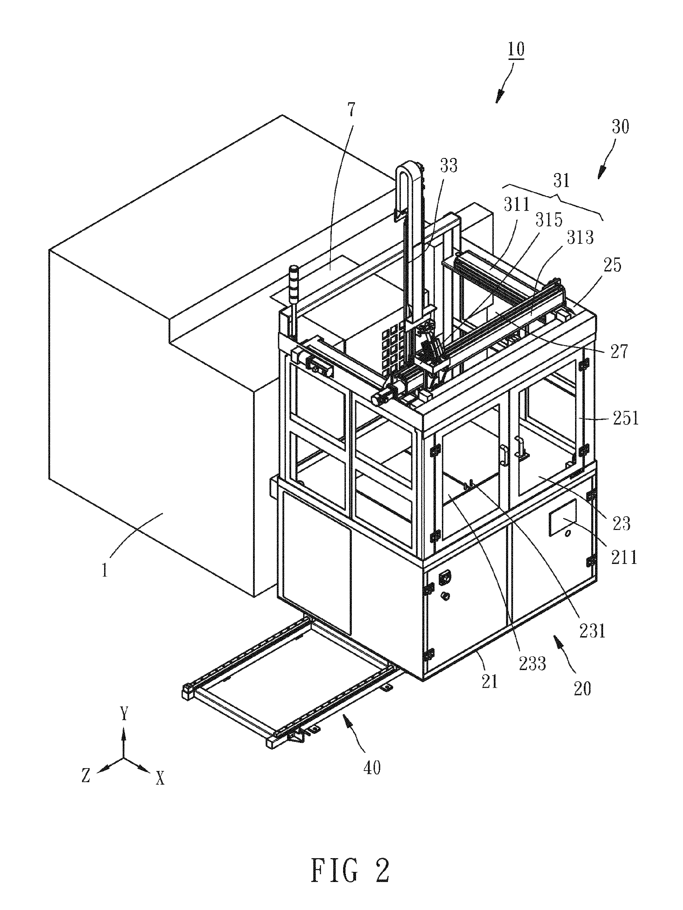

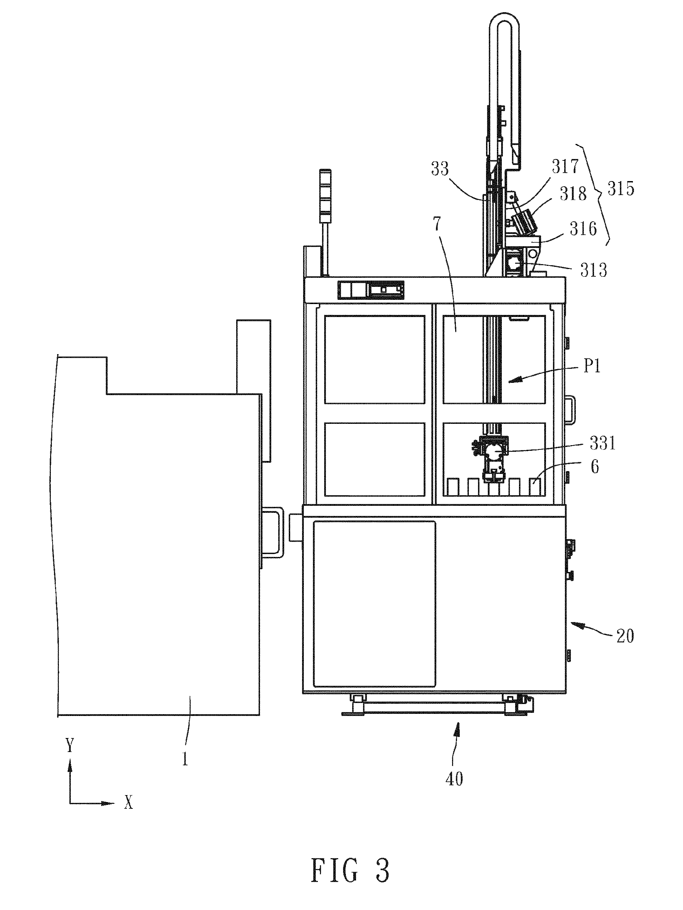

FIG. 2 and FIG. 3 depict a front door-type automatic material-taking device 10 according to one preferred embodiment of the present invention, which comprises the components described below.

The front door-type automatic material-taking device 10 has a feed table 20 to be set in front of a machine tool 1 for holding one or more workpieces 6. While in the preferred embodiment the feed table 20 has a cabinet-like structure for containing the workpieces 6 therein, it may be in other embodiments a conveying device or a conveyor belt, without limitation. The machine tool 1 is a computer numerical control (CNC) machine tool, and is atop provided with a feed inlet 7 that opens or close in response to the opening or closing of shutters (as described below) of the machine tool 1.

The front door-type automatic material-taking device 10 also has a material-taking mechanism 30, which includes a linear displacement unit 31 and a robotic arm 33. The linear displacement unit 33 fixed to the top of the feed table 20 serves to move the robotic arm 33 along a first axis Z, a second axis X, and a third axis Y, and make the robotic arm 33 rotate against the first axis Z up to a specific angle D1, so that the robotic arm 33 can move between the feed table 20 and the machine tool 1 to take and place the workpiece 6.

The front door-type automatic material-taking device 10 also has a sliding mechanism 40, which is fixed to the ground. The material-taking mechanism 30 is slidably attached to the sliding mechanism 40 and can slide away from the front of the machine tool 1.

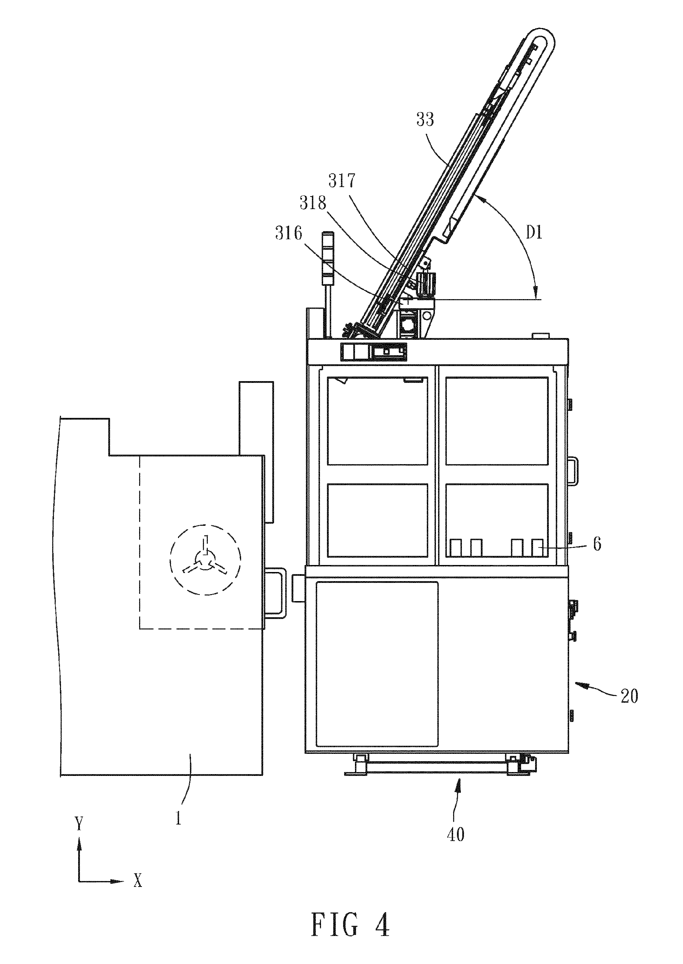

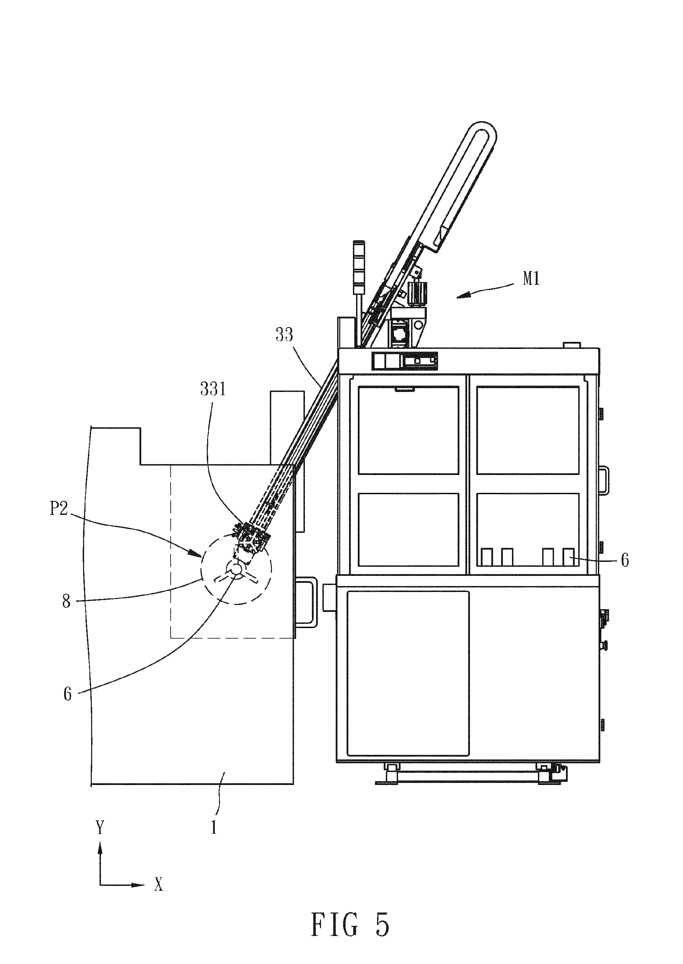

The feed table 20, as shown in FIG. 3 through FIG. 5, includes a base 21, a platform 23 on the base 21, a frame 25, and an opening 27 provided at the top of the feed table. The base 21 includes an electric control unit 211, which is electrically connected to the material-taking mechanism 30 and the machine tool 1, respectively. The platform 23 has a positioning section 231 and a tray 233. The tray 233 is positioned on the positioning section 231, and serves to hold the workpieces 6. The frame 25 is mounted on the base 21 and surrounds a periphery of the platform 23, so as to define the opening 27. The frame 25 has two said shutters 251 in front of the second axis X. Each of the shutters 251 is pivotable against the third axis Y. Thereby, when the robotic arm 33 moves over the feed table 20, the feed table 20 provides the robotic arm 33 with firm support, which helps to reduce sway and in turn improve precision of material-taking and material-placing operation. In this way, during the automatic material-taking and material-placing procedures, the robotic arm 33 can perform precisely and ensure successful operation. Additionally, the frame 25 and the shutters 251 can not only ensure the operator with operational safety, but also facilitate positioning of the tray 233 on the positioning section 231 of the platform 23, thereby reducing the time required by tray change and in turn improving the efficiency of automated processing.

The material-taking mechanism 30 includes a first slide rail seat 311, a second slide rail seat 313 and a third slide rail seat 315. The first slide rail seat 311 is mounted on the top of the frame 25 of the feed table 20 and extends along the second axis X. The second slide rail seat 313 spans over the first slide rail seat 311, and can move along the second axis X. The third slide rail seat 315 has a holding section 316, a pivoting section 317, and a driving section 318. The holding section 316 is slidably attached to the second slide rail seat 313 and can move along the first axis Z. The pivoting section 317 is pivotally attached to the holding section 316. The robotic arm 33 is displaceably attached to the pivoting section 317. The driving section 318 is connected between the holding section 316 and the pivoting section 317. The robotic arm 33 has a material-taking section 331, which is rotatably attached to a front end of the robotic arm 33 and faces the feed table 20, so as to rotate between a material-taking position P1 and a material-placing position P2 for taking and placing the workpiece 6.

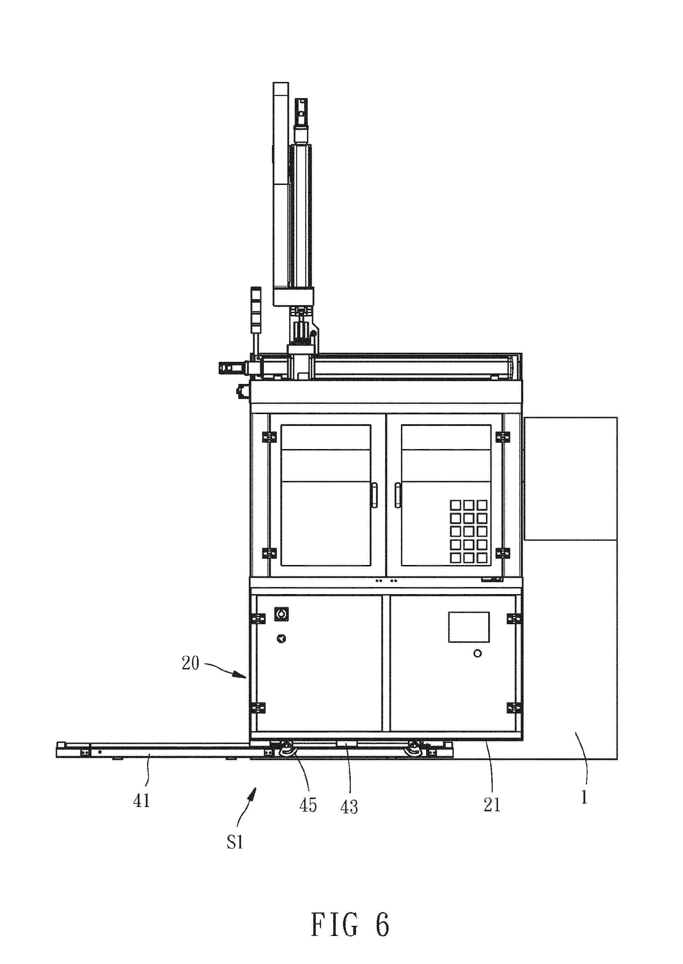

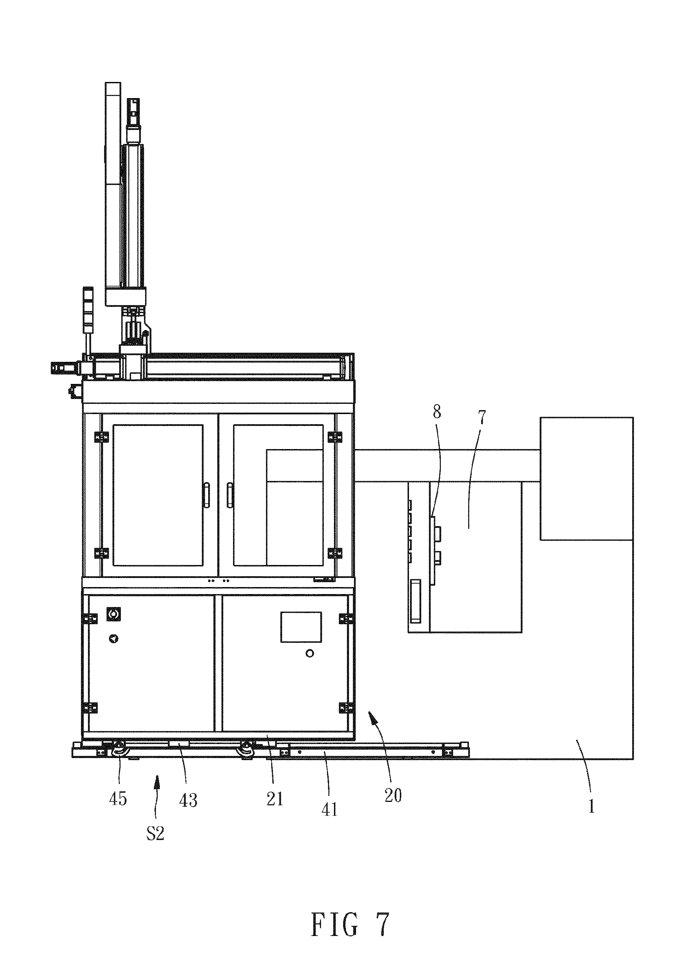

Referring to FIG. 6 and FIG. 7, the sliding mechanism 40 includes a fixed seat 41, a sliding seat 43, and a positioning member 45. The fixed seat 41 is fixed to the ground and has a working position S1 at one end close to the front of the machine tool 1 as well as a stop position S2 at an opposite end far from the machine tool 1. The sliding seat 43 is fixed to the base 21 of the feed table 20, and can shift between the working position S1 and the stop position S2 on the fixed seat 41. The positioning member 45 is provided between the fixed seat 41 and the sliding seat 43, for positioning the sliding seat 43 at the working position S1 or the stop position S2.

Please refer to FIG. 3 through FIG. 7 for the practical installation and operation of the disclosed front door-type automatic material-taking device 10. Prior to the automatic operation of taking and placing the workpiece 6, the feed table 20 is moved by means of the fixed seat 41 and the sliding seat 43 of the sliding mechanism 40, and positioned at the working position S1 by means of the positioning member 45. After the feed table 20 is positioned, the robotic arm 33 stretches to reach the feed table 20 through the opening 27, and then the material-taking section 331 rotates to the material-taking position P1 (namely becoming parallel to the third axis Y) to take the workpiece 6 placed on the tray 233. Afterward, the robotic arm 33 moves along the pivoting section 317 of the third slide rail seat 315 to go up in the third axis Y, and then moves along the first and second slide rail seats 311, 313 to move in the first axis Z and the second axis X, until the robotic arm 33 comes to a first predetermined position M1. At this time, the driving section 318 makes the pivoting section 317 to rotate with respect to the holding section 316 up to the specific angle D1, and the robotic arm 33 moves along the pivoting section 317 of the third slide rail seat 315 toward the second and third axes X and Y and stretches into the feed inlet 7 of the machine tool 1 to get aligned with the central axis of the chuck 8. The material-taking section 331 has rotated to the material-placing position P2 (namely the workpiece 6 and the chuck 8 being coaxial). At last, the chuck 8 of the machine tool 1 takes over the workpiece 6 for machining. Upon the completion of machining, the robotic arm 33 stretches to the chuck 8 of the machine tool 1 again to take and put the machined workpiece 6 back to the tray 233, thereby accomplishing automatic material-taking and material-placing procedures. After all the automatic material-taking and material-placing procedures are finished, the operator can access and make maintenance to the machine tool 1 by dismissing the previous positioning, sliding the feed table 20 away from the front of the machine tool 1, and positioning the feed table 20 at the stop position S2. Thereby, the operator can easily and promptly access the feed table 20 by operating the sliding mechanism 40, so as to enjoy improved working efficiency.

To sum up, the disclosed front door-type automatic material-taking device 10 features for the stable feed table 20 that enable the material-taking mechanism 30 to take and place the workpiece 6 precisely, and for the sliding mechanism 40 that allows the feed table 20 to be displaced promptly, thereby enhancing working efficiency. Moreover, the positioning section 231 on the platform 23 facilitates prompt positioning of the tray 233, thereby reducing the time required by tray change and in turn improving the efficiency of automated processing.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A front door-type automatic material-taking device (10), comprising:
a feed table (20), being located in front of a machine tool (1) and serving to hold a workpiece (6);
a material-taking mechanism (30), including a linear displacement unit (31) and a robotic arm (33), wherein the linear displacement unit (31) is fixed to a top of the feed table (20) and drives the robotic arm (33) to move along a first axis (Z), a second axis (X), and a third axis (Y) and to rotate against the first axis (Z) up to a specific angle (D1), so that the robotic arm (33) is enabled to move between the feed table (20) and the machine tool (1) to take and place the workpiece (6); and
a sliding mechanism (40), being fixed to the ground, wherein the material-taking mechanism (30) is slidably attached to the sliding mechanism (40) and is configured to slide away from the front of the machine tool (1).

2. The front door-type automatic material-taking device (10) of Claim 1, wherein the feed table (20) includes a base (21) and a platform (23) deposited on the base (21); the base (21) having an electric control unit (211) that is electrically connected to the material-taking mechanism (30) and the machine tool (1), respectively; and the platform (23) having a positioning section (231) and a tray (233), in which the tray (233) is positioned on the positioning section (231) and serves to hold the workpiece (6).

3. The front door-type automatic material-taking device (10) of Claim 2, wherein the feed table (20) further comprises a frame (25), which is mounted on the base (21) and surrounds a periphery of the platform (23).

4. The front door-type automatic material-taking device (10) of Claim 3, wherein the frame (25) is provided with a shutter (251) that is located in front of the second axis (X) and pivotable against the third axis (Y).

5. The front door-type automatic material-taking device (10) of Claim 1, wherein the linear displacement unit (31) includes a first slide rail seat (311), a second slide rail seat (313) and a third slide rail seat (315); the first slide rail seat (311) being mounted on a top of the feed table (20) and extending in the second axis (X); the second slide rail seat (313) spanning over the first slide rail seat (311) and moving along the second axis (X); the third slide rail seat being slidably attached to the second slide rail seat (313) and moving along the first axis (Z); and the robotic arm (33) being displaceably attached to the third slide rail seat (315).

6. The front door-type automatic material-taking device (10) of Claim 5, wherein the third slide rail seat (315) of the linear displacement unit (31) has a holding section (316), a pivoting section (317) and, a driving section (318); the holding section (316) being slidably attached to the second slide rail seat (313); the pivoting section (317) being pivotally attached to the holding section (316); the robotic arm (33) displaceably attached to the pivoting section (317); and the driving section (318) being connected between the holding section (316) and the pivoting section (317).

7. The front door-type automatic material-taking device (10) of Claim 5, wherein the machine tool (1) and the feed table (20) are atop provided with a feed inlet (7) and an opening (27), respectively, for the robotic arm (33) to take or place the workpiece (6) therethrough.

8. The front door-type automatic material-taking device (10) of Claim 2, wherein the sliding mechanism (40) includes a fixed seat (41) and a sliding seat (43), in which the fixed seat (41) is fixed to the ground, and the sliding seat (43) is such attached to the base (21) of the feed table (20) that the sliding seat (43) is allowed to shift between a working position (S1) and a stop position (S2) on the fixed seat (41).

9. The front door-type automatic material-taking device (10) of Claim 8, wherein the sliding mechanism (40) further comprises a positioning member (45), which is provided between the fixed seat (41) and the sliding seat (43), for positioning the sliding seat (43) at the working position (S1) or at the stop position (S2).

10. The front door-type automatic material-taking device (10) of Claim 1, wherein the robotic arm (33) has a material-taking section (331), which is rotatably attached to a front end of the robotic arm (33) and faces the feed table (20), for rotating in order to take or place the workpiece (6).
